# EUROPEAN PATENT SPECIFICATION

(11) **EP 4 491 018 B1**
(45) Date of publication and mention of the grant of the patent: **27.05.2026**
(21) Application number: 22937323.8
(22) Date of filing: 30.12.2022
(51) Int. Cl.: A01M 21/04

(54) **GRASS BURNING MACHINE**
GRASVERBRENNUNGSMASCHINE
MACHINE DE COMBUSTION D'HERBE

(30) Priority: 14.04.2022 CN 202210414089; 14.04.2022 CN 202220884942 U
(43) Date of publication of application: 15.01.2025
(73) Proprietor: Zhejiang Prulde Electric Appliance Co., Ltd., Jinhua, Zhejiang 321035 (CN); Batavia B.V., 7951 SN Staphorst (NL)
(72) Inventor: YANG, Weiming, Jinhua, Zhejiang 321035 (CN); PAAIS, Raymond, 7951 SN Staphorst (NL)
(74) Representative: karo IP
(86) International application number: PCT/CN2022/143885
(87) International publication number: WO 2023/197697

(56) References cited:
- CN-A- 111 296 402
- CN-A- 114 794 071
- CN-U- 209 643 668
- CN-U- 209 643 668
- CN-U- 211 860 585
- CN-U- 211 860 585
- CN-U- 211 860 586
- DE-C1- 4 141 322
- DE-C1- 4 141 322
- JP-A- 2002 078 439
- JP-A- 2005 027 604
- JP-A- 2005 110 516
- JP-A- 2005 110 516
- JP-A- 2015 139 430
- JP-A- 2015 139 430

## Description

### FIELD

The disclosure relates to an apparatus for killing unwanted plants, and more particularly relates to a weed burner.

### BACKGROUND

The applicant of the present disclosure ever filed a utility application relating to a still-air weed burner on December 27, 2018 (issued as CN209643668U); the still-air weed burner disclosed therein comprises: a control arm 100, a power supply 200, and a heater 300, the power supply 200 being disposed on the control arm 100 and operable to power the heater 300, the heater 300 being disposed at a bottom end of the control arm 100 and electrically connected to the power supply 200. The still-air weed burner further comprises a burner tip disposed at the bottom end of the control arm 100, the burner tip being disposed outside the heater 300; the working temperature of the energized heater 300 ranges from 200°C ~ 600°C. The heater is energized to produce heat during operation, the heat being released via the burner tip to scorch the weed, whereby the weed is dehydrated, shriveled, and then killed off. Since the foliage and root of the weed are both dehydrated under the intense heat, a better weed killing effect is achieved. The heater 300 disclosed therein may adopt a heating rod or a heating wire, both of which produce heat in an electric resistance manner. The resistance-wire heating manner has a low heating efficiency; in addition, the resistance wire is easily oxidized and damaged under high temperature, which thus needs regular maintenance, incurring a high cost.

### SUMMARY

Disclosed is a weed burner, which has an extended service life and a reduced use cost.

A technical solution according to the disclosure is provided below: a weed burner, comprising a control arm, a burner tip, a housing, and a heater, the burner tip being connected to the control arm, the control arm being movably connected to the housing, wherein the heater comprises an electromagnetic coil that is secured to the housing; the burner tip comprises a magnetizer that is electromagnetically heated; the burner tip has a heating position where the magnetizer is located in the electromagnetic coil to perform heating and an operating position where the magnetizer is located outside the electromagnetic coil to perform weed burning, an operating temperature of the magnetizer being not lower than 200°C.

Furthermore, the housing comprises a jacket sleeved over an outer periphery of the burner tip, a front end of the jacket being formed with a through hole for the burner tip to pass through, the electromagnetic coil being secured in the jacket.

Furthermore, the jacket is an insulation jacket.

Furthermore, an elastic member is arranged between the control arm and the housing, the elastic member contributing the burner tip a tendency of being held to the heating position.

Furthermore, the elastic member is sleeved over an outer periphery of the control arm; the control arm is provided with a locating boss and a movable gasket, a rear end of the elastic member abutting against the locating boss, a front end of the elastic member abutting against the movable gasket; the movable gasket is provided with a limiting convex rib; and the housing is formed with a limiting recess that is fitted with the limiting convex rib to locate the movable gasket.

Furthermore, a front end of the housing is provided with a stand configurable to abut against the ground to retain the housing, the control arm being movable relative to the housing to allow for the burner tip to access the operating position; or, the housing is provided with a manipulator against which a force is exerted by a user, the housing being movable relative to the control arm to allow for the burner tip to access the operating position.

Furthermore, the magnetizer is located at a front end of the burner tip; or, the burner tip is formed by the magnetizer.

Furthermore, the housing is provided with a normal-ON safety switch, the safety switch being operable to control connect or disconnect between the electromagnetic coil and a power supply; the control arm is provided with a trigger portion, the trigger portion being operable to close the safety switch when the burner tip accesses the heating position.

Furthermore, the safety switch is a microswitch, and the trigger portion is a convex rib arranged in a projecting manner; or, the safety switch is a magnetic induction switch, and the trigger portion is a magnet.

Furthermore, the housing is provided with a circuit board configured to control operation of the electromagnetic coil; and/or, the housing is provided with a battery which supplies power to the electromagnetic coil.

With the technical solutions noted *supra,* the present disclosure offers the following benefits: the electromagnetic heating manner enables fast temperature rise of the magnetizer; since heat is produced from the magnetizer itself, the thermal conversion is particularly high, so that the burner tip can reach a target temperature quickly, which enhances operating efficiency of the weed burner and fundamentally overcomes low thermal efficiency of the resistance-wire heating manner. Since the electromagnetic coil itself basically does not produce heat, its service life can reach as long as 10 years substantially without a maintenance need, so that no maintenance and replacement costs would be incurred; meanwhile, since the electromagnetic coil itself does not produce heat, a small thermal retardation and a low thermal inertia are contributed, which facilitates real-time, accurate control of the magnetizer temperature and improves quality of the weed burner. The electromagnetic coil may be wound by high-temperature-resistant, high-pressure-resistant cable wire, which is more conveniently manufactured with a good electrically insulative property than resistance wire; meanwhile, since the electromagnetic coil does not directly contact the magnetizer, potential electric leakage is substantially eliminated, contributing operational safety. The burner tip has a heating position and an operating position; when the burner tip accesses the heating position, the magnetizer retracts into the electromagnetic coil so as to be concealed therein, which can form certain protection to the magnetizer and prevent damages due to accidental collision; the magnetizer moves outside of the electromagnetic coil only when the burner tip accesses the operating position, so that the magnetizer, which is heated to a high temperature at the heating position, is not easily accessed by the user; meanwhile, an insulation jacket is additionally mounted external to the electromagnetic coil to further enhance operating safety of the weed burner.

### BRIEF DESCRIPTION OF THE DRAWINGS

The disclosure will be explained further with reference to the accompanying drawings:
Fig. 1 is a structural schematic diagram of a weed burner according to the disclosure;
Fig. 2 is a sectional view of the weed burner according to the disclosure;
Fig. 3 is an exploded view of a control arm, an elastic member, a burner tip, a heater, and a jacket of the weed burner according to the disclosure;
Fig. 4 is an internal schematic diagram of the housing of the weed burner according to the disclosure;
Fig. 5 is a sectional view along direction A-A in Fig. 4.

### DETAILED DESCRIPTION OF EMBODIMENTS

To make the objectives, technical solutions, and advantages of the embodiments of the disclosure more apparent, the technical solutions in the embodiments of the disclosure will be described in a clear and comprehensive manner; it is apparent that the example described herein are only part of the embodiments of the disclosure, not all of them.

The terms like "first," "second," "third," and "fourth" (if existent) in the specification, claims, and drawings are used for distinguishing like objects, not necessarily used for describing a specific sequence or priority. It should be understood that features referred to with such numerals may be replaced with each other in appropriate circumstances, such that the examples described herein can be implemented in a sequence not illustrated or described here.

It will be understood that, in the embodiments of the disclosure, larger or smaller reference numerals referred to in various processes do not indicate execution sequences and shall not constitute any limitation to the implementation processes in the embodiments of the disclosure, where the execution sequences in the processes shall be determined based on their functions and internal logic.

It will be understood that, the terms "comprise" and "have," as well as any of their variants, are intended for a non-exclusive inclusion, e.g., a process, method, system, product, or apparatus comprising a series of steps or units are not necessarily limited to those steps or units explicitly limited herein, but may further comprise other steps or units not explicitly limited herein or inherent to such a process, method, product or apparatus.

It will be understood that, in the disclosure, the term "plurality" refers to two or more. The term "and/or" only describes an association relationship of associated objects, which indicates that there may exist three relationships, e.g., X and/or Y may indicate three circumstances: X individually, or both X and Y together, or Y individually. The character "/" generally indicates a relationship of "or" between the former and latter associated objects. The term "comprising X, Y, and Z" or "comprising X, Y, Z" refers to comprising all of X, Y, and Z; the term "comprising X, Y, or Z" refers to comprising one of X, Y, and Z; the term "comprising X, Y and/or Z" refers to comply any one, or any two, or three of X, Y, and Z.

Hereinafter, the technical solution of the disclosure will be described in detail through specific implementations. The specific implementations described *infra* may be combined or replaced with each other dependent on actual situations, and same or similar concepts or processes may be omitted in some implementations.

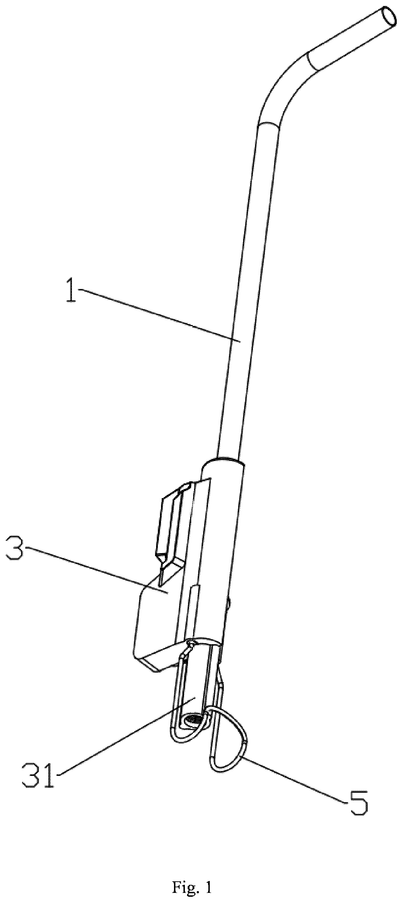

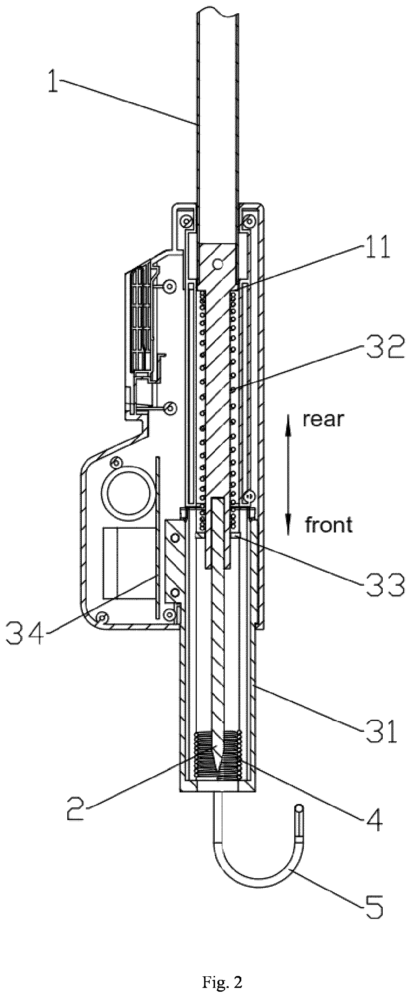

As illustrated in Figs. 1 to 3, a weed burner described herein comprises a control arm 1, a burner tip 2, a housing 3, and a heater, the burner tip 2 being connected to the control arm 1, the control arm 1 being movably connected to the housing 3; the heater comprises an electromagnetic coil 4 that is secured to the housing 3; the burner tip 2 comprises a magnetizer that can be electromagnetically heated; the burner tip 2 has a heating position where the magnetizer is located in the electromagnetic coil 4 to perform heating and an operating position where the magnetizer is located outside the electromagnetic coil 4 to perform weed burning. Fig. 1 illustrates the heating position; to achieve a better weed killing effect, the working temperature of the magnetizer is not lower than 200°C, which, for example, may be controlled to an appropriate temperature such as 200°C, 240°C, 300°C, 350°C, 400°C, or 500°C; the electromagnetic heating manner contributes a higher controllability to the heating temperature of the burner tip 2.

The electromagnetic heating manner described herein enables fast temperature rise of the magnetizer; since heat is produced from the magnetizer itself, the thermal conversion is particularly high, so that the burner tip 2 can reach a target temperature quickly, which enhances operating efficiency of the weed burner and fundamentally overcomes low thermal efficiency of the resistance-wire heating manner. Since the electromagnetic coil 4 itself basically does not produce heat, its service life can reach as long as 10 years substantially without a maintenance need, so that no maintenance and replacement costs would be incurred; meanwhile, since the electromagnetic coil 4 itself does not produce heat, a small thermal retardation and a low thermal inertia are contributed, which facilitates real-time, accurate control of the magnetizer temperature and improves quality of the weed burner. The electromagnetic coil 4 may be wound by high-temperature-resistant, high-pressure-resistant cable wire, which is more conveniently manufactured with a good electrically insulative property than resistance wire; meanwhile, since the electromagnetic coil 4 does not directly contact the magnetizer, potential electric leakage is substantially eliminated, contributing operational safety. The burner tip 2 has a heating position and an operating position; when the burner tip 2 accesses the heating position, the magnetizer retracts into the electromagnetic coil 4 so as to be concealed therein, which can form certain protection to the magnetizer and prevent damages due to accidental collision; the magnetizer moves outside of the electromagnetic coil 4 only when the burner tip 2 accesses the operating position, so that the magnetizer, which is heated to a high temperature at the heating position, is not easily accessed by the user; meanwhile, an insulation jacket is additionally mounted external to the electromagnetic coil 4 to further enhance operating safety of the weed burner.

For the sake of protection, the housing 3 may be designed to comprise a jacket 31 sleeved over the outer periphery of the burner tip 2 so as to protect the burner tip 2 and the electromagnetic coil 4 from being damaged due to accidental collision, a front end of the jacket 31 being formed with a through hole for the burner tip 2 to pass through, the electromagnetic coil 4 being secured within the jacket 31. As noted *supra,* the jacket 31 may be an insulation jacket made of a thermally insulative material, further enhancing operating safety of the weed burner.

To retain the burner tip 2 to the heating position or the operating position, a damping mechanism may be arranged between the control arm 1 and the housing 3; for example, a rubber sleeve is sleeved over the control arm 1, the rubber sleeve being secured to the housing 3, so that friction between the rubber sleeve and the control arm 1 retains the burner tip 2 to the heating position or the operating position.

To enable the burner tip 2 to automatically reset from the operating position to the heating position, an elastic member 32 contributing the burner tip 2 a tendency of being held to the heating position may be arranged between the control arm 1 and the housing 3 in case that the user forgets resetting the burner tip 2 from the operating position to the heating position. After the user inserts the burner tip 2 into the soil to kill the plant, the elastic force of the elastic member 32 enables the burner tip 2 to automatically exit from the soil, whereby less effort is needed for the user's operation. In this case, a damping structure is eliminated, as the elastic force of the elastic member 32 may hold the burner tip 2 to the heating position, while the user's acting force may hold the burner tip 2 to the operating position.

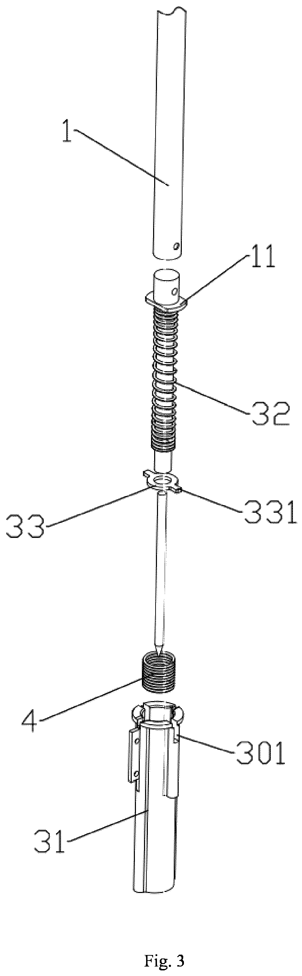

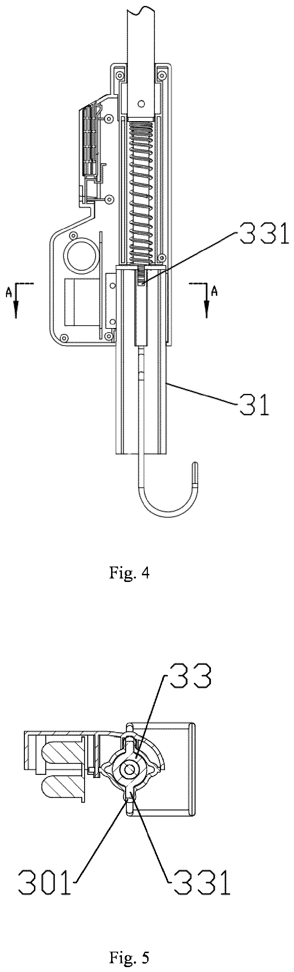

The elastic member 32 may adopt a typical component such as a spring or a spring washer. In an implementation, the elastic member 32 is sleeved over the outer periphery of the control arm 1; to axially locate the two ends of the elastic member 32, the control arm 1 may be provided with a locating boss 11 and a movable gasket 33, a rear end of the elastic member 32 abutting against the locating boss 11, a front end thereof abutting against the movable gasket 33; the movable gasket 33 is provided with a limiting convex rib 331, and the housing 3 is formed with a limiting recess 301 which is fitted with the limiting convex rib 331 to locate the movable gasket 33 (the limiting recess 301 may be formed on the jacket 31, as illustrated in Figs. 3 to 5). The movable gasket 33 is removable from the control arm 1 to facilitate mounting of the elastic member 32. It may be understood that, the front end of the elastic member 32 may directly abut against the housing 3 or the jacket 31, and a corresponding locating structure is provided on the housing 1 or the jacket 31.

To switch the burner tip 2 conveniently between the heating position and the operating position, in an implementation, a stand 5 configurable to abut against the ground to retain the housing 3 may be arranged at the front end of the housing 3; the control arm 1 moves relative to the housing 3 to drive the burner tip 2 to access the operating position, i.e., the user exerts a force against the control arm 1 to drive the burner tip 2 to move relative to the electromagnetic coil 4; since the user needs to exert a force to drive the burner tip 2 into the soil, the switching and driving operations may be done in one action, i.e., while the burner tip 2 is driven into the soil, it is switched from the heating position to the operating position, whereby the operation process is facilitated. It may be understood that, it is also feasible to configure the housing 3 movable relative to the control arm 1, e.g., a manipulator against which a force is applied by the user is arranged on the housing 3, in which case before the user drives the burner tip 2 into the soil, a force is first applied against the manipulator to drive the housing 3 to move so that the burner tip 2 accesses the operating position, and then the burner tip 2 is driven into the soil.

Since it is the front end of the burner tip 2 that mainly works to burn an unwanted plant, in an implementation, the magnetizer may be arranged at the front end of the burner tip 2, while the remaining portion of the burner tip 2 may be made of a magnetically non-permeable material; as such, the electromagnetic heating pauses when the burner tip 2 accesses the operating position, which may play a role of energy conservation. It may be understood that, if the burner tip 2 still needs heating after accessing the operating position, in another implementation, the burner tip 2 may be made of the magnetizer in its entirety or in its majority, so that after the burner tip 2 accesses the operating position, the magnetizer is still present in the electromagnetic coil 4, which can continuously heat the burner tip 2.

In addition to arranging the magnetizer in the electromagnetic coil 4 to continue heating after the burner tip 2 accesses the operating position, in a further implementation, the housing 3 may be provided with a normal-ON safety switch. The safety switch is operable to control connect or disconnect between the electromagnetic coil 4 and a power supply; the control arm 1 is provided with a trigger portion, the trigger portion being operable to close the safety switch when the burner tip 2 accesses the heating position. Specifically, the safety switch may be selected as a microswitch, and the trigger portion is a convex rib arranged in a projecting manner; alternatively, the safety switch may be a magnetic induction switch, e.g., a reed switch or a Hall sensor, and the trigger portion is a magnet.

In addition, a circuit board 34 configured to control operation of the electromagnetic coil 4 may be provided at the housing 3 or another position, e.g., on the control arm 1; or, an electric control kit separate from the weed burner may be specifically designed, with the circuit board 34 enclosed therein, the circuit board 34 being electrically connected when needed. The weed burner may be powered by a mains supply or by a battery, and in the latter case, a battery supplying power to the electromagnetic coil 4 may be provided in the housing 3.

In addition to the example embodiments described above, the disclosure further has other embodiments, and all other embodiments derived by those skilled in the art based on the example embodiments described herein without exercise of inventive work fall into the scope of the disclosure.

## Claims

1. A weed burner, comprising a control arm (1), a burner tip (2), a housing (3), and a heater, the burner tip (2) being connected to the control arm (1), **characterised in that**
the control arm is movably connected to the housing (3), wherein the heater comprises an electromagnetic coil (4) that is secured to the housing (3); the burner tip (2) comprises a magnetizer that is electromagnetically heated; the burner tip (2) has a heating position where the magnetizer is located in the electromagnetic coil (4) to perform heating and an operating position where the magnetizer is located outside the electromagnetic coil (4) to perform weed burning.

2. The weed burner according to claim 1, wherein the housing comprises a jacket (31) sleeved over an outer periphery of the burner tip (2), a front end of the jacket (31) being formed with a through hole for the burner tip (2) to pass through, the electromagnetic coil (4) being secured in the jacket (31).

3. The weed burner according to claim 2, wherein the jacket (31) is an insulation jacket.

4. The weed burner according to claim 1, wherein an elastic member (32) is arranged between the control arm (1) and the housing (3), the elastic member (32) contributing the burner tip (2) a tendency of being held to the heating position.

5. The weed burner according to claim 4, wherein the elastic member (32) is sleeved over an outer periphery of the control arm (1); the control arm (1) is provided with a locating boss (11) and a movable gasket (33), a rear end of the elastic member (32) abutting against the locating boss (11), a front end of the elastic member (32) abutting against the movable gasket (33); the movable gasket (33) is provided with a limiting convex rib (331); and the housing (3) is formed with a limiting recess (301) that is fitted with the limiting convex rib (331) to locate the movable gasket (33).

6. The weed burner according to claim 1, wherein a front end of the housing (3) is provided with a stand (5) configurable to abut against the ground to retain the housing (3), the control arm (1) being movable relative to the housing (3) to allow for the burner tip (2) to access the operating position; or, the housing (3) is provided with a manipulator against which a force is exerted by a user, the housing (3) being movable relative to the control arm (1) to allow for the burner tip (2) to access the operating position.

7. The weed burner according to claim 1, wherein the magnetizer is located at a front end of the burner tip (2); or, the burner tip (2) is formed by the magnetizer.

8. The weed burner according to claim 1, wherein the housing (3) is provided with a normal-ON safety switch, the safety switch being operable to control connect or disconnect between the electromagnetic coil (4) and a power supply; the control arm (1) is provided with a trigger portion, the trigger portion being operable to close the safety switch when the burner tip (2) accesses the heating position.

9. The weed burner according to claim 8, wherein the safety switch is a microswitch, and the trigger portion is a convex rib arranged in a projecting manner; or, the safety switch is a magnetic induction switch, and the trigger portion is a magnet.

10. The weed burner according to claim 1, wherein the housing (3) is provided with a circuit board (34) configured to control operation of the electromagnetic coil (4); and/or, the housing (3) is provided with a battery which supplies power to the electromagnetic coil (4).

## Patentansprüche

1. Unkrautbrenner, der einen Kontrollarm (1), eine Brennerspitze (2), ein Gehäuse (3) und einen Heizer aufweist, wobei die Brennerspitze (2) mit dem Kontrollarm (1) verbunden ist,
**dadurch gekennzeichnet, dass** der Kontrollarm beweglich mit dem Gehäuse (3) verbunden ist, wobei der Heizer eine Elektromagnetspule (4) aufweist, die am Gehäuse (3) gesichert ist; die Brennerspitze (2) einen Magnetisierer aufweist, der elektromagnetisch erhitzt wird; die Brennerspitze (2) eine Heizposition aufweist, in der sich der Magnetisierer in der Elektromagnetspule (4) befindet, um ein Heizen durchzuführen, und eine Betriebsposition, in der sich der Magnetisierer außerhalb der Elektromagnetspule (4) befindet, um eine Unkrautverbrennung durchzuführen.

2. Der Unkrautbrenner nach Anspruch 1, wobei das Gehäuse einen Mantel (31) aufweist, der über den Außenumfang der Brennerspitze (2) gestülpt ist, wobei ein vorderes Ende des Mantels (31) mit einer Durchgangsöffnung versehen ist, durch die die Brennerspitze (2) hindurchgeführt werden kann, und wobei die Elektromagnetspule (4) im Mantel (31) gesichert ist.

3. Der Unkrautbrenner nach Anspruch 2, wobei der Mantel (31) ein Isoliermantel ist.

4. Der Unkrautbrenner nach Anspruch 1, wobei zwischen dem Kontrollarm (1) und dem Gehäuse (3) ein Elastikelement (32) angeordnet ist, wobei das Elastikelement (32) dazu beiträgt, dass die Brennerspitze (2) eine Tendenz hat, in der Heizposition gehalten zu werden.

5. Der Unkrautbrenner nach Anspruch 4, wobei das Elastikelement (32) über den Außenumfang des Kontrollarms (1) geschoben ist; Der Kontrollarm (1) mit einem Positionierungsvorsprung (11) und einer beweglichen Dichtung (33) vorgesehen ist, wobei ein hinteres Ende des Elastikelements (32) an dem Positionierungsvorsprung (11) anliegt und ein vorderes Ende des Elastikelements (32) an der beweglichen Dichtung (33) anliegt; die bewegliche Dichtung (33) mit einer begrenzenden konvexen Rippe (331) vorgesehen ist; und das Gehäuse (3) mit einer begrenzenden Aussparung (301) ausgebildet ist, die mit der begrenzenden konvexen Rippe (331) in Eingriff steht, um die bewegliche Dichtung (33) zu positionieren.

6. Der Unkrautbrenner nach Anspruch 1, wobei ein vorderes Ende des Gehäuses (3) mit einem Ständer (5) vorgesehen ist, der dazu ausgebildet ist, am Boden anzuliegen, um das Gehäuse (3) zu halten, wobei der Kontrollarm (1) relativ zum Gehäuse (3) beweglich ist, um der Brennerspitze (2) den Zugang zur Betriebsposition zu ermöglichen; oder das Gehäuse (3) mit einem Manipulator vorgesehen ist, auf den ein Benutzer eine Kraft ausübt, wobei das Gehäuse (3) relativ zum Kontrollarm (1) beweglich ist, um der Brennerspitze (2) den Zugang zur Betriebsposition zu ermöglichen.

7. Der Unkrautbrenner nach Anspruch 1, wobei sich der Magnetisierer an einem vorderen Ende der Brennerspitze (2) befindet; oder die Brennerspitze (2) durch den Magnetisierer gebildet wird.

8. Der Unkrautbrenner nach Anspruch 1, wobei das Gehäuse (3) mit einem Sicherheitsschalter mit Normal-EIN-Stellung vorgesehen ist, wobei der Sicherheitsschalter dazu dient, die Verbindung zwischen der Elektromagnetspule (4) und einer Stromversorgung herzustellen oder zu unterbrechen; wobei der Kontrollarm (1) mit einem Auslöseabschnitt versehen ist, wobei der Auslöseabschnitt dazu dient, den Sicherheitsschalter zu schließen, wenn die Brennerspitze (2) die Heizposition erreicht.

9. Der Unkrautbrenner nach Anspruch 8, wobei der Sicherheitsschalter ein Mikroschalter ist und der Auslöseabschnitt eine hervorstehende, konvexe Rippe ist; oder wobei der Sicherheitsschalter ein magnetischer Induktionsschalter ist und der Auslöseabschnitt ein Magnet ist.

10. Der Unkrautbrenner nach Anspruch 1, wobei das Gehäuse (3) mit einer Leiterplatte (34) vorgesehen ist, die dazu ausgebildet ist, den Betrieb der Elektromagnetspule (4) zu steuern; und/oder das Gehäuse (3) mit einer Batterie vorgesehen ist, die die Elektromagnetspule (4) mit Strom versorgt.

## Revendications

1. Brûleur de mauvaises herbes, comprenant un bras de commande (I), un bec de brûleur (2), un boîtier (3) et un dispositif de chauffage, le bec de brûleur (2) étant relié au bras de commande (I), **caractérisé en ce que** le bras de commande est relié de manière mobile au boîtier (3), dans lequel le dispositif de chauffage comprend une bobine électromagnétique (4) qui est fixée au boîtier (3) ; le bec de brûleur (2) comprend un magnétiseur qui est chauffé électromagnétiquement ; le bec de brûleur (2) a une position de chauffage où le magnétiseur est situé dans la bobine électromagnétique (4) pour effectuer le chauffage et une position de fonctionnement où le magnétiseur est situé à l'extérieur de la bobine électromagnétique (4) pour effectuer le brûlage de mauvaises herbes.

2. Brûleur de mauvaises herbes selon la revendication 1, dans lequel le boîtier comprend une enveloppe (31) emmanchée sur une périphérie extérieure du bec de brûleur (2), une extrémité avant de l'enveloppe (31) étant formée d'un trou traversant pour le bec de brûleur (2), la bobine électromagnétique (4) étant fixée dans l'enveloppe (31).

3. Brûleur de mauvaises herbes selon la revendication 2, dans lequel l'enveloppe (31) est une enveloppe isolante.

4. Brûleur de mauvaises herbes selon la revendication 1, dans lequel un élément élastique (32) est disposé entre le bras de commande (1) et le boîtier (3), l'élément élastique (32) donnant au bec de brûleur (2) une tendance à être maintenue dans la position de chauffage.

5. Brûleur de mauvaises herbes selon la revendication 4, dans lequel l'élément élastique (32) est emmanché sur une périphérie extérieure du bras de commande (1) ; le bras de commande (1) est pourvu d'un bossage de positionnement (11) et d'un joint mobile (33), une extrémité arrière de l'élément élastique (32) venant en butée contre le bossage de positionnement (11), une extrémité avant de l'élément élastique (32) venant en butée contre le joint mobile (33) ; le joint mobile (33) est pourvu d'une nervure convexe de limitation (331) ; et le boîtier (3) est formé d'une cavité de limitation (301) qui est adaptée à la nervure convexe de limitation (331) pour positionner le joint mobile (33).

6. Brûleur de mauvaises herbes selon la revendication 1, dans lequel une extrémité avant du boîtier (3) est pourvue d'un support (5) configurable pour s'appuyer contre le sol afin de retenir le boîtier (3), le bras de commande (1) étant mobile par rapport au boîtier (3) pour permettre au bec de brûleur (2) d'accéder à la position de fonctionnement ; ou, le boîtier (3) est pourvu d'un manipulateur contre lequel une force est exercée par un utilisateur, le boîtier (3) étant mobile par rapport au bras de commande (1) pour permettre au bec de brûleur (2) d'accéder à la position de fonctionnement.

7. Brûleur de mauvaises herbes selon la revendication 1, dans lequel le magnétiseur est positionné au niveau de l'extrémité avant du bec de brûleur (2) ; ou, le bec de brûleur (2) est formé par le magnétiseur.

8. Brûleur de mauvaises herbes selon la revendication 1, dans lequel le boîtier (3) est équipé d'un interrupteur de sécurité normal-ON, l'interrupteur de sécurité pouvant être utilisé pour contrôler la connexion ou la déconnexion entre la bobine électromagnétique (4) et une alimentation électrique ; le bras de commande (1) est équipé d'une partie de déclenchement, la partie de déclenchement pouvant être utilisée pour fermer l'interrupteur de sécurité lorsque le bec de brûleur (2) accède à la position de chauffage.

9. Brûleur de mauvaises herbes selon la revendication 8, dans lequel l'interrupteur de sécurité est un micro-interrupteur, et la partie de déclenchement est une nervure convexe disposée en saillie ; ou, l'interrupteur de sécurité est un interrupteur à induction magnétique, et la partie de déclenchement est un aimant.

10. Brûleur de mauvaises herbes selon la revendication 1, dans lequel le boîtier (3) est pourvu d'une carte de circuit imprimé (34) configurée pour contrôler le fonctionnement de la bobine électromagnétique (4) ; et/ou, le boîtier (3) est pourvu d'une batterie qui alimente la bobine électromagnétique (4).
